# EUROPEAN PATENT APPLICATION

(11) **EP 2 918 493 A1**
(43) Date of publication of application: **16.09.2015**
(21) Application number: 13852954.0
(22) Date of filing: 16.10.2013
(51) Int. Cl.: B63B 35/44, F16K 17/22, F16K 13/08

(54) **INTERCEPTING DEVICE**

(30) Priority: 12.11.2012 CN 201210447632
(71) Applicant: Ye, Xiaofeng, Lishui, Zhejiang 323060 (CN); Lishui Likong Technology Ltd., Lishui, Zhejiang 323060 (CN)
(72) Inventor: Ye, Xiaofeng, Lishui, Zhejiang 323060 (CN)
(74) Representative: Machtalère, Georges
(86) International application number: PCT/CN2013/085299
(87) International publication number: WO 2014/071795

(57) **Abstract**

The present invention discloses an intercepting device capable of maintaining interception without the need of ensuring the sealing performance and automatically adjusting a height for interception. This intercepting device overcomes the deficiencies that a prior art intercepting device will fail to work if failing to ensure the sealing performance and can block only fluid at a same height as the intercepting device. This intercepting device comprises a high liquid level end (1) and a low liquid level end (2), the high liquid level end being in communication with the low liquid level end via a conduit, the conduit being provided successively in a fluctuating manner and every fluctuation forming a chamber with its lower end separated and its upper end communicated; and within the chamber, provided are a front liquid column segment (3), a rear liquid column segment (4), and an air-sealed segment (5) located in the upper portion of the chamber to separate the front liquid column segment from the rear liquid column segment, the height of the front liquid column segment being greater than that of the rear liquid column segment. The intercepting device is applicable to the occasions where a conventional intercepting device is applicable, avoids the problem in the prior art of needing to ensure the sealing performance while intercepting, and is capable of adjusting the height for interception.

## Description

### Technical Field of the Invention

The present invention relates to the field of restriction to the flow of fluid, in particular to an intercepting device.

### Background of the Invention

Fluid flows, if free of external force, to a low liquid level from a high liquid level. It is often needed in production and life to intercept fluid, in order to prevent fluid from flowing to a low liquid level from a high liquid level. An existing intercepting device or method is usually to separate the high liquid level from the low liquid level so that fluid in the high liquid level is unable to flow to the low liquid level. However, a blocking means used in such a method must ensure the high liquid level and the low liquid level completely sealed, or the interception purpose can not be achieved; furthermore, a slight deviation in the position for sealing will cause uncompleted sealing, and the whole intercepting device thus fails to work immediately. It is most difficult to control the sealing performance during the actual production and also quite expensive to ensure the sealing performance. Moreover, there may be some objects, in a low position, to be protected against fluid invasion in production and life, conventional solutions are to prevent fluid in a high position from flowing to the low position by a blocking means. However, when the height of fluid in the high position continues to rise over that of the blocking means, the blocking means is unable to prevent fluid in the high position from flowing to the low position. As a result, the object in the low position is wet and damaged by fluid.

Referring to Chinese Patent Document CN1821539B, entitled "Anti-flood Water Blocking Plate", disclosed is an anti-flood water blocking plate, including a sealed frame, a plurality of water blocking plates assembled inside the sealed frame, and a plurality of fastening screw bolts for connecting each of the water blocking plates to the bottom of the sealed frame. Each of the water blocking plates has a side groove and a side tongue on its left and right sides, the grooves and tongues of two adjacent water blocking plates being meshed to each other; each of the water blocking plates has a bottom groove; and a through hole is longitudinally penetrated through a top notch of each of the side tongues. The sealed frame is fixed onto to outer frame, and has a side-frame groove and a side-frame groove on its left and right side frames and a lower-frame tongue fitted with the bottom groove of each of the water blocking plates on its lower frame; and a nut is provided in a position, corresponding to the through hole on the tongue side of each of the water blocking plates, on the flange of the lower-frame tongue. A thread section is provided at a lower end portion of each of the fastening screw bolts; and each of the fastening screw bolts is longitudinally penetrated into the through hole of the flange of the side tongue of each of the water blocking plates, to be thread fitted with the nut on the lower-frame tongue of the sealed frame via the thread section on its lower end portion. However, such an intercepting device has quite high requirements on the sealing performance. The high liquid level and the low liquid level must be completely blocked, and this intercepting device will fail to work once the sealing performance is insufficient. Furthermore, such an intercepting device just can block fluid in the high liquid level end at a certain height from flowing to the low liquid level, and will fail to work once fluid in the high liquid level exceeds the height of the intercepting device.

### Summary of the Invention

An objective of the present invention is to provide an intercepting device capable of maintaining interception without the need of ensuring the sealing performance, to solve the deficiencies that a prior art intercepting device will fail to work if failing to ensure the sealing performance during the interception.

Another objective of the present invention is to provide an intercepting device capable of automatically adjusting a height for interception, to solve the deficiencies that a prior art intercepting device can block only fluid at a same height as the intercepting device when an object, in a low position, is to be protected.

The present invention is implemented by the following solutions.

An intercepting device, including a high liquid level end and a low liquid level end, the high liquid level end being in communication with the low liquid level end via a conduit, the conduit being provided successively in a fluctuating manner and every fluctuation forming a chamber with its lower end separated and its upper end communicated; within the chamber, provided are a front liquid column segment, a rear liquid column segment, and an air-sealed segment located in the upper portion of the chamber to separate the front liquid column segment from the rear liquid column segment, the height of the front liquid column segment being greater than that of the rear liquid column segment; and the conduit runs a round such that the horizontal cross-section of a chamber becomes annular and all the chambers form a cylinder, the cylinder comprising an upper main body formed of upper portions of all the chambers and a base formed of lower portions of all the chambers. As the chambers are communicated to each other to form a conduit, one of adjacent chambers is in fact communicated to another, with the front liquid column segment of a next chamber being connected to the rear liquid column segment of a previous chamber and the height of the front liquid column segment being greater than that of the rear front liquid column segment. Hence, a pressure, resulted from a difference in the liquid level, is formed in the air-sealed segment. This is common for every chamber. By counteracting the sum of pressure with the difference in pressure between the high liquid level end and the low liquid level end, fluid at the high liquid level end is prevented from flowing to the low liquid level end, interception is thus realized.

In such an intercepting method, the high liquid level end is communicated to the low liquid level end via all the chambers, without requiring any actual seal. When in comparison to the structures such as a sealing plate in the prior art, the present invention succeeds in interception without the need of ensuring the sealing performance of the contact faces. The annular cylinder can block and intercept the outside fluid in the high position from flowing into the cylinder. For example, by providing a base around a cargo ship in water and an upper main body on the base, the high liquid level end is located outside the cylinder while the low liquid level end is inside the cylinder. In this case, if the outside liquid level rises, the chambers move upward, that is, the upper main body moves upward; and if the base descends due to the increase of loads borne by the ship or other factors, the upper main body moves upward with respect to the base, vice versa, the upper main body moves downward with respect to the base. The upper main body may move up and down within a certain range to adapt to the change in the outside liquid level, so that the height for interception is adjustable. Moreover, when the annular shape is a circle, the upper main body may rotate with respect to the lower base. For example, by providing a lower base around an offshore operating platform and an upper main body on the lower base, the outside seawater, the level of which rises, may be intercepted to some extent so that it will not flood the offshore operating platform. In the case where there is any operating equipment mounted on the upper main body, if it is required to change the position of the operating equipment, it may be realized by rotating the upper main body, instead of dismounting the operating equipment for change of position since it is unable to move the whole offshore operating platform entirely as mounted on a sealed and fixed intercepting device. Thus, great convenience is brought to the production and life.

Preferably, a lowest air-sealed point of the air-sealed segment is at a same height as that of a lowest point of the upper main body, and a highest air-sealed point of the air-sealed segment is at a same height as that of a highest point of the base. In this state, a maximum difference in height between the front liquid column segment and the rear liquid column segment is obtained, and a same interception effect under the same conditions may be realized by a minimum quantity of chambers.

Preferably, on the upper main body, there is one or more circles of buoys located on an external side of the upper main body. Fluid outside the upper main body provides buoyancy for the buoys which enable the upper main body to float over the base more stably. When the liquid level of the upper main body rises or the position of the base descends, the buoys may help the upper main body to move upward easily if desired.

Preferably, a connecting cord is provided between the upper main body and the base, and the lowest point of the upper main body is below the highest point of the base when the connecting cord is in an ultimate tensile state. Through the connecting cord, the upper main body and the base may be kept to be relatively positioned, that is, they will not escape from their limit positions while having a certain degree of freedom. Under an external force, the upper main body may move up and down or left and right. The connecting cord enters an ultimate tensile state when the upper main body moves to its limit position, and at this moment, the lowest point of the upper main body is below the highest point of the base so that the intercepting function still can be obtained.

Preferably, on the upper main body, a countertop for covering the upper main body is provided, the countertop being against an upper surface of the upper main body; and the countertop and the upper main body are integrated, and a barrier is provided on an outer edge of the base. The countertop may serve to store various objections and equipment, and the base when not in use may be located below but disconnected from the upper main body. When the liquid level of the outside fluid rises, for example, during a flood, the base ascends due to the buoyancy and the barrier connected to the base also ascends to avoid the invasion of the outside water to the countertop; and as the base is staggered with the upper main body after ascending, water enters the middle part of the base and further enters the chambers as the liquid level continues to rise, so that an intercepting device as described by the present invention is formed. In this way, water in the middle part of the base is less likely to flow to the outside of the base and then to the countertop, and thus will not damage the object on the countertop. Hence, the object on the countertop may be avoided from getting wet neither by the outside water nor by water surging from the lower end. And, when there is no water, the base may return back to its original position. Meanwhile, the upper main body may change its height automatically along with the formation of the intercepting device of the present invention, to maintain the interception effect.

As another structure form of another conduit, the horizontal cross-section of a chamber of the conduit is rectangular and all the chambers form a rectangular box, the box including an upper main body formed of upper portions of all the chambers and a base formed of lower portions of all the chambers; the two sides of all spacers on the upper main body are sealed to form a structure having a sealed upper portion and an open lower portion, with an independent sealed space being formed between the spacers; and the spacers on the lower main body are located in the sealed space corresponding to the upper main body. In this solution, by this spacer structure, as all chambers are communicated to each other to form a conduit, one of adjacent chambers is in fact communicated to another, with the front liquid column segment of a next chamber being connected to the rear liquid column segment of a previous chamber and the height of the front liquid column segment being greater than that of the rear front liquid column segment. Hence, a pressure, resulted from a difference in the liquid level, is formed in the air-sealed segment. This is common for every chamber. By counteracting the sum of pressure with the difference in pressure between the high liquid level end and the low liquid level end, fluid at the high liquid level end is prevented from flowing to the low liquid level end, interception is thus realized. Forming an independent sealed space between the spacers on the upper main body can effectively prevent the air leakage in the air-sealed segment, and the sealing performance is thus improved.

Hence, the present invention has the following beneficial effects: first, interception may be realized without sealing, so that the need of ensuring the sealing performance in the prior art is omitted; and second, the intercepting device is more flexible when in use, since it is movable to a certain extent, that is, can rotate relatively and move up and down, which differs from those fixed seals in the prior art that can not be adjusted.

### Brief Description the Drawings

Fig. 1 is a structural diagram of embodiment 1 of the present invention;
Fig. 2 is a top view of embodiment 2 of the present invention;
Fig. 3 is a sectional view of Fig. 2 in the radial direction, according to the present invention;
Fig. 4 is a structural diagram of embodiment 3 of the present invention; and
Fig. 5 is a structural diagram of embodiment 4 of the present invention; and
in which:
1: High liquid level end
2: Low liquid level end
3. Front liquid column segment
4: Rear liquid column segment
5: Air-sealed segment
6: Upper main body
7: Base
8: Buoy
9: Countertop
10: Barrier

### Detailed Description of the Invention

The specific embodiments of the technical solutions of the present invention will be further described as below with reference to the accompanying drawings by embodiments.

### Embodiment 1

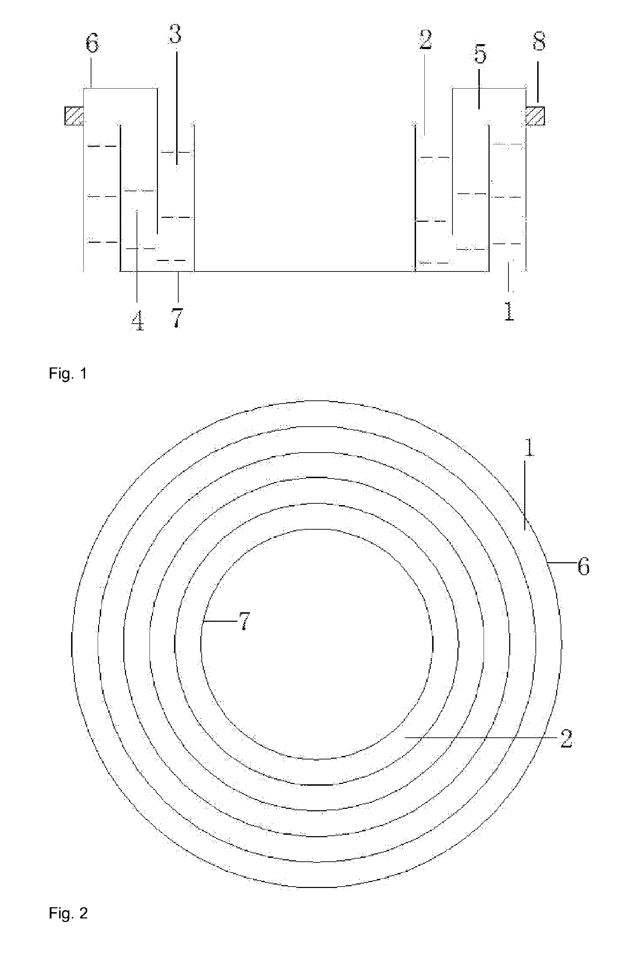

In the embodiment 1 as shown in Fig. 1, an intercepting device is provided, including a high liquid level end 1 and a low liquid level end 2, the high liquid level end 1 being in communication with the low liquid level end 2 via a conduit, the conduit being provided successively in a fluctuating manner and every fluctuation forming a chamber with its lower end separated and its upper end communicated. Within the chamber, provided are a front liquid column segment 3, a rear liquid column segment 4, and an air-sealed segment 5 located in the upper portion of the chamber to separate the front liquid column segment 3 from the rear liquid column segment 4, the height of the front liquid column segment 3 being greater than that of the rear liquid column segment 4. The conduit runs a round such that the horizontal cross-section of a chamber becomes annular and all the chambers form a cylinder, the cylinder including an upper main body 6 formed of upper portions of all the chambers and a base 7 formed of lower portions of all the chambers. As the height of the front liquid column segment 3 is greater than that of the rear liquid column segment 4, a pressure, resulted from a difference in the liquid level, is formed in the air-sealed segment 5. By counteracting this pressure with the difference in pressure between the high liquid level end 1 and the low liquid level end 2, fluid at the high liquid level end 1 is prevented from flowing to the low liquid level end 2, interception is thus realized. Furthermore, the air-sealed segment 5 may change within a certain range of height, consequently, an adjustment allowance is provided so that the difference in liquid level between the front liquid column segment 3 and the rear liquid column segment 4 may be increased or decreased automatically according to the outside change. On the upper main body 6, there is one circle of buoys 8 located on an external side of the upper main body 6. Fluid outside the upper main body 6 provides buoyancy for the buoys 8 which enable the upper main body 6 to float over the base 7 more stably. When the liquid level outside the upper main body 6 rises or the position of the base 7 descends, the buoys 8 may help the upper main body 6 to move upward easily if desired. A connecting cord is provided between the upper main body 6 and the base 7, and the lowest point of the upper main body 6 is below the highest point of the base 7 when the connecting cord is in an ultimate tensile state. Through the connecting cord, the upper main body 6 and the base 7 may be kept to be relatively positioned, that is, they will not escape from their limit positions while having a certain degree of freedom. Under an external force, the upper main body 6 may move up and down or left and right. The connecting cord enters an ultimate tensile state when the upper main body moves to its limit position, and at this moment, the lowest point of the upper main body 6 is below the highest point of the base 7 so that the intercepting function still can be obtained.

### Embodiment 2

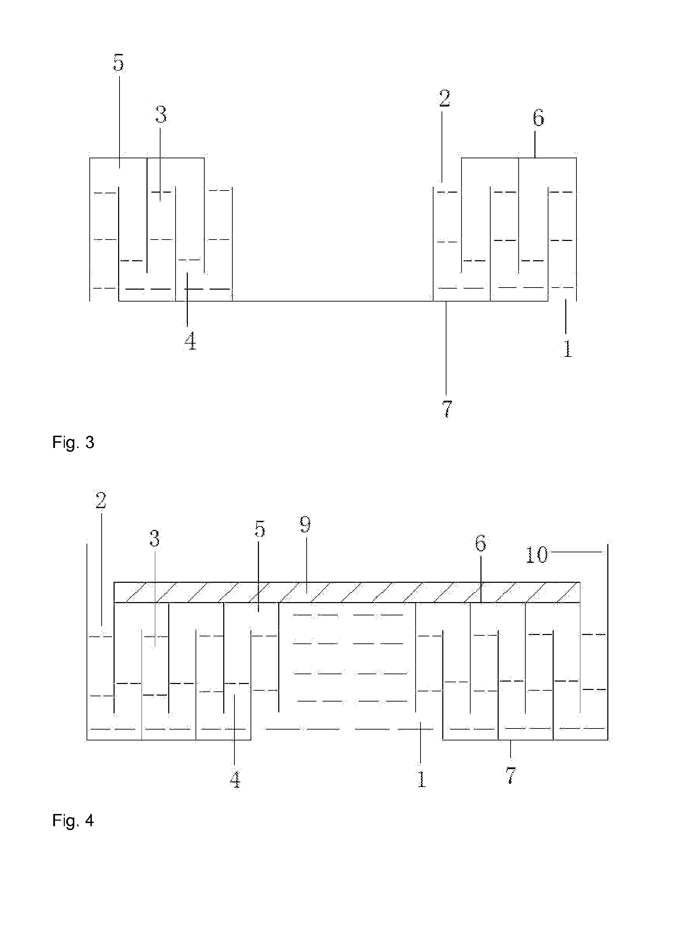

In the embodiment 2 as shown in Fig. 2 and Fig. 3, an intercepting device is provided, including a high liquid level end 1 and a low liquid level end 2, the high liquid level end 1 being in communication with the low liquid level end 2 via a conduit, the conduit being provided successively in a fluctuating manner and every fluctuation forming a chamber with its lower end separated and its upper end communicated; within the chamber, provided are a front liquid column segment 3, a rear liquid column segment 4, and an air-sealed segment 5 located in the upper portion of the chamber to separate the front liquid column segment 3 from the rear liquid column segment 4, the height of the front liquid column segment 3 being greater than that of the rear liquid column segment 4. As the chambers are communicated to each other to form a conduit, one of adjacent chambers is in fact communicated to another, with the front liquid column segment 3 of a next chamber being connected to the rear liquid column segment 4 of a previous chamber and the height of the front liquid column segment 3 being greater than that of the rear front liquid column segment 4. Hence, a pressure, resulted from a difference in the liquid level, is formed in the air-sealed segment 5. This is common for every chamber. By counteracting the sum of pressure with the difference in pressure between the high liquid level end 1 and the low liquid level end 2, fluid at the high liquid level end 1 is prevented from flowing to the low liquid level end 2, interception is thus realized. In such an intercepting method, the high liquid level end 1 is communicated to the low liquid level end 2 via all the chambers, without requiring any actual seal. When in comparison to the structures such as a sealing plate in the prior art, the present invention succeeds in interception without the need of ensuring the sealing performance. The conduit runs a round such that the horizontal cross-section of a chamber becomes annular and all the chambers form a cylinder, the cylinder including an upper main body 6 formed of upper portions of all the chambers and a base 7 formed of lower portions of all the chambers. The annular cylinder can block and intercept the outside fluid in the high position from flowing into the cylinder. For example, by providing a base 7 around a cargo ship in water and an upper main body 6 on the base 7, the high liquid level end 1 is located outside the cylinder while the low liquid level end 2 is inside the cylinder. In this case, if the outside liquid level rises, the chambers move upward, that is, the upper main body 6 moves upward; and if the base 7 descends due to the increase of loads borne by the ship or other factors, the upper main body 6 moves upward with respect to the base 7, vice versa, the upper main body 6 moves downward with respect to the base 7. The upper main body 6 may move up and down within a certain range to adapt to the change in the outside liquid level, so that the height for interception is adjustable. For devices in the sea, such as offshore operating platforms and ships, during a storm, a intercepting plate in the prior art has no function of shock absorption after impacted and transfers great vibration to an offshore operating platform and a ship connected to the base 7 to cause damage thereto. The upper main body 6 in the present invention, during a storm or under an external force, may fluctuate up and down or left and right within a certain range for shock absorption, and will not transfer too much vibration to the base 7 and a device connected to the base 7, thereby realizing high safety and long service life. Moreover, when the annular shape is a circle, the upper main body 6 may rotate with respect to the lower base 7. For example, by providing a lower base 7 around an offshore operating platform and an upper main body 6 on the lower base 7, the outside seawater, the level of which rises, may be prevented from flooding the offshore operating platform. In the case where there is any operating equipment mounted on the upper main body 6, if it is required to change the position of the operating equipment, it may be realized by rotating the upper main body 6, instead of dismounting the operating equipment for change of position since it is unable to move the whole offshore operating platform entirely as mounted on a sealed and fixed intercepting device. Thus, great convenience is brought to the production and life. The upper main body 6 may be taken off directly when no interception is required, and mounted onto the base when in use. A lowest air-sealed point of the air-sealed segment 5 is at a same height as that of a lowest point of the upper main body 6, and a highest air-sealed point of the air-sealed segment 5 is at a same height as that of a highest point of the base 7. In this state, a maximum difference in height between the front liquid column segment 3 and the rear liquid column segment 4 is obtained, and a same interception effect under the same conditions may be realized by a minimum quantity of chambers. The intercepting device provided by the present invention, when sealed at its upper end, may be submerged into fluid to serve as a submerged device. Also, the flow of external fluid and internal fluid may be intercepted by using the chamber structure of the present invention, without employing the conventional sealing form.

### Embodiment 3

In the embodiment 3 as shown in Fig. 4, an intercepting device is provided, including a high liquid level end 1 and a low liquid level end 2, the high liquid level end 1 being in communication with the low liquid level end 2 via a conduit, the conduit being provided successively in a fluctuating manner and every fluctuation forming a chamber with its lower end separated and its upper end communicated; within the chamber, provided are a front liquid column segment 3, a rear liquid column segment 4, and an air-sealed segment 5 located in the upper portion of the chamber to separate the front liquid column segment 3 from the rear liquid column segment 4, the height of the front liquid column segment 3 being greater than that of the rear liquid column segment 4. As the chambers are communicated to each other to form a conduit, one of adjacent chambers is in fact communicated to another, with the front liquid column segment 3 of a next chamber being connected to the rear liquid column segment 4 of a previous chamber and the height of the front liquid column segment 3 being greater than that of the rear front liquid column segment 4. Hence, a pressure, resulted from a difference in the liquid level, is formed in the air-sealed segment 5. This is common for every chamber. By counteracting the sum of pressure with the difference in pressure between the high liquid level end 1 and the low liquid level end 2, fluid at the high liquid level end 1 is prevented from flowing to the low liquid level end 2, interception is thus realized. In such an intercepting method, the high liquid level end 1 is communicated to the low liquid level end 2 via all the chambers, without requiring any actual seal. When in comparison to the structures such as a sealing plate in the prior art, the present invention succeeds in interception without the need of ensuring the sealing performance. Preferably, the conduit runs a round such that the horizontal cross-section of a chamber becomes annular and all the chambers form a cylinder, the cylinder comprising an upper main body 6 formed of upper portions of all the chambers and a base 7 formed of lower portions of all the chambers. On the upper main body 6, a countertop 9 for covering the upper main body 6 is provided, the countertop 9 being against an upper surface of the upper main body 6; and the countertop 9 and the upper main body 6 are integrated, and a barrier 10 is provided on an outer edge of the base 7. The countertop 9 may serve to store various objections and equipment, and the base 7 when not in use may be located below but disconnected from the upper main body 6. When the liquid level of the outside fluid rises, for example, during a flood, the base 7 ascends due to the buoyancy and the barrier 10 connected to the base 7 also ascends to avoid the invasion of the outside water to the countertop 9; and as the base 7 is staggered with the upper main body 6 after ascending, water enters the middle part of the base 7 and further enters the chambers as the liquid level continues to rise, so that an intercepting device as described by the present invention is formed. In this way, water in the middle part of the base 7 is less likely to flow to the outside of the base 7 and then to the countertop 9, and thus will not damage the object on the countertop 8. Hence, the object on the countertop may be avoided from getting wet neither by the outside water nor by water surging from the lower end. And, when there is no water, the base 7 may return back to its original position. Meanwhile, the upper main body 6 may change its height automatically along with the formation of the intercepting device of the present invention, to maintain the interception effect. The fluid, forming the front liquid column segment 3 and the rear column segment 4, may be the fluid to be intercepted or other liquids.

### Embodiment 4

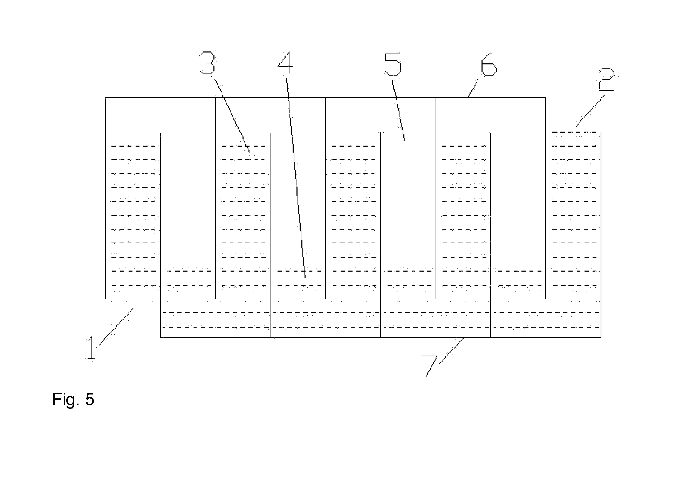

In the embodiment 4 as shown in Fig. 5, an intercepting device is provided, including an upper main body 6 and a base 7 opposite to the upper main body, with spacers being provided in a staggered manner between the upper main body 6 and the base 7; a conduit is provided between the spacers, with the two ends of each conduit forming a high liquid level end 1 and a low liquid level end 2, the high liquid level end 1 being in communication with the low liquid level end 2 via the conduit, the conduit being provided successively in a fluctuating manner and every fluctuation forming a chamber with its lower end separated and its upper end communicated; within the chamber, provided are a front liquid column segment 3, a rear liquid column segment 4, and an air-sealed segment 5 located in the upper portion of the chamber to separate the front liquid column segment 3 from the rear liquid column segment 4, the height of the front liquid column segment 3 being greater than that of the rear liquid column segment 4. The horizontal cross-section of a chamber of the conduit is rectangular and all the chambers form a rectangular box, the box including an upper main body formed of upper portions of all the chambers and a base formed of lower portions of all the chambers; the two sides of all spacers on the upper main body are sealed to form a structure having a sealed upper portion and an open lower portion, with an independent sealed space being formed between the spacers; and the spacers on the lower main body are located in the sealed space corresponding to the upper main body.

In this embodiment, by this spacer structure, as all chambers are communicated to each other to form a conduit, one of adjacent chambers is in fact communicated to another, with the front liquid column segment of a next chamber being connected to the rear liquid column segment of a previous chamber and the height of the front liquid column segment being greater than that of the rear front liquid column segment. Hence, a pressure, resulted from a difference in the liquid level, is formed in the air-sealed segment. This is common for every chamber. By counteracting the sum of pressure with the difference in pressure between the high liquid level end and the low liquid level end, fluid at the high liquid level end is prevented from flowing to the low liquid level end, interception is thus realized. Forming an independent sealed space between the spacers on the upper main body can effectively prevent the air leakage in the air-sealed segment, and the sealing performance is thus improved. In such an intercepting method, the high liquid level end is communicated to the low liquid level end via all the chambers, without requiring any actual seal. When in comparison to the structures such as a sealing plate in the prior art, the present invention succeeds in interception without the need of ensuring the sealing performance of the contact faces.

In addition to embodiments as described above, without departing from the scope disclosed by the claims and the description of the present invention, the technical features or technical data of the present invention may be reselected and recombined to form new embodiments, and these new embodiments not described in details herein, which may be made by those skilled in the art without any creative efforts, should be regarded as falling into the protection scope of the present as specific embodiments of the present invention; additionally, the structure of the present invention may work normally even in the case where the inlet and the outlet are changed, and hence, such implementations are also included within the protection scope of the present invention.

## Claims

1. An intercepting device, comprising a high liquid level end (1) and a low liquid level end (2), the high liquid level end (1) being in communication with the low liquid level end (2) via a conduit, the conduit being provided successively in a fluctuating manner and every fluctuation forming a chamber with its lower end separated and its upper end communicated; within the chamber, provided are a front liquid column segment (3), a rear liquid column segment (4), and an air-sealed segment (5) located in the upper portion of the chamber to separate the front liquid column segment (3) from the rear liquid column segment (4), the height of the front liquid column segment (3) being greater than that of the rear liquid column segment (4).

2. The intercepting device according to claim 1, **characterized in that** the conduit runs a round such that the horizontal cross-section of a chamber becomes annular and all the chambers form a cylinder, the cylinder comprising an upper main body (6) formed of upper portions of all the chambers and a base (7) formed of lower portions of all the chambers.

3. The intercepting device according to claim 2, **characterized in that** a lowest air-sealed point of the air-sealed segment (5) is at a same height as that of a lowest point of the upper main body (6).

4. The intercepting device according to claim 2, **characterized in that** a highest air-sealed point of the air-sealed segment (5) is at a same height as that of a highest point of the base (7).

5. The intercepting device according to claim 2 or 3 or 4, **characterized in that**, on the upper main body (6), there is one or more circles of buoys (8) located on an external side of the upper main body (6).

6. The intercepting device according to claim 2 or 3 or 4, **characterized in that** a connecting cord is provided between the upper main body (6) and the base (7), and the lowest point of the upper main body (6) is below the highest point of the base (7) when the connecting cord is in an ultimate tensile state.

7. The intercepting device according to claim 2, **characterized in that**, on the upper main body (6), a countertop (9) for covering the upper main body (6) is provided, the countertop (9) being against an upper surface of the upper main body (6).

8. The intercepting device according to claim 7, **characterized in that** the countertop (9) and the upper main body (6) are integrated, and a barrier (10) is provided on an outer edge of the base (7).

9. The intercepting device according to claim 1, **characterized in that**, the horizontal cross-section of a chamber of the conduit is rectangular and all the chambers form a rectangular box, the box including an upper main body (6) formed of upper portions of all the chambers and a base (7) formed of lower portions of all the chambers; the two sides of all spacers on the upper main body are sealed to form a structure having a sealed upper portion and an open lower portion, with an independent sealed space being formed between the spacers; and the spacers on the lower main body are located in the sealed space corresponding to the upper main body.
